# EUROPEAN PATENT APPLICATION

(11) **EP 2 887 266 A1**
(43) Date of publication of application: **24.06.2015**
(21) Application number: 13199369.3
(22) Date of filing: 23.12.2013
(51) Int. Cl.: G06K 9/34, G06K 9/46, G06T 7/00

(54) **Automatic extraction of a region of interest based on speculum detection**

(71) Applicant: Koninklijke Philips N.V., 5656 AE Eindhoven (NL)
(72) Inventor: The designation of the inventor has not yet been filed
(74) Representative: Verweij, Petronella Danielle

(57) **Abstract**

The invention relates to a method and an apparatus for processing an image to filter unwanted regions and extract a region of interest (e.g. the cervix region of a patient) based on speculum detection executed immediately after the image is captured, and to save the cervix region instead of a full image. Unwanted regions are removed and the image is cropped to be restricted to the region of interest, so that storage space can be saved. Thereby, workflow efficiency can be increased and storage space and transmission time can be reduced.

## Description

### FIELD OF THE INVENTION

The invention relates to the field of apparatuses and methods for image processing used in connection with visual screening and examination of medical images to determine abnormalities, such as cervical cancer.

### BACKGROUND OF THE INVENTION

Examination of cervix under light with and without magnification enables early detection of cervical cancer and hence lowering morbidity and mortality. It is a skilled procedure requiring handling of a camera, positioning and appropriate magnification. However, due to high burden of patients, clinicians are only interested to see the cervix in less magnification image before going for higher magnifications. However, many of the first or second captured images have lot of unwanted regions including patient's vaginal tract, legs etc. These captured images pose many challenges due to privacy and produce a wrong impression of the captured image. It becomes absolutely necessary to remove these unwanted regions and only save the object of interest. When an expert clinician reviews the images for screening or diagnosis purposes, she has to manually zoom to see the cervix and many times she judges based on what is visible on her computer screen.

There is a need for a solution which can help in directly extracting the cervix after a medical image is captured and removing unwanted regions, cropping the image and saving the cropped image. Then, at a later point in time, the clinician can just analyse the extracted cervix regions and give the clinical judgement.

For a screening model where images are captured in one location and transmitted to another location for reviewing, the size of the images is also important since it determines the amount of data to be transmitted and stored.

Typically, a conventional cervical examination starts with fitment of a speculum in vaginal opening which is also used to open the vaginal walls such that cervix is visible outside. A speculum is a medical tool for investigating body cavities, with a form dependent on the body cavity for which it is designed. Like an endoscope, a speculum allows entry into a body cavity. Endoscopes, however, tend to have optics while a speculum is intended for direct vision. It is a challenging task to extract the cervix regions automatically as cervical examination is done in different stages and cervix appearance varies a lot in different stages, e.g., in an acetic acid stage or in a lugol iodine stage.

The main technique to screen and diagnose a patient for cervical cancer is by visually analyzing photographs with or without enhancement stains like acetic acid and lugol iodine. This visual examination is generally performed using colposcopes, cervicographs and mobile cameras.

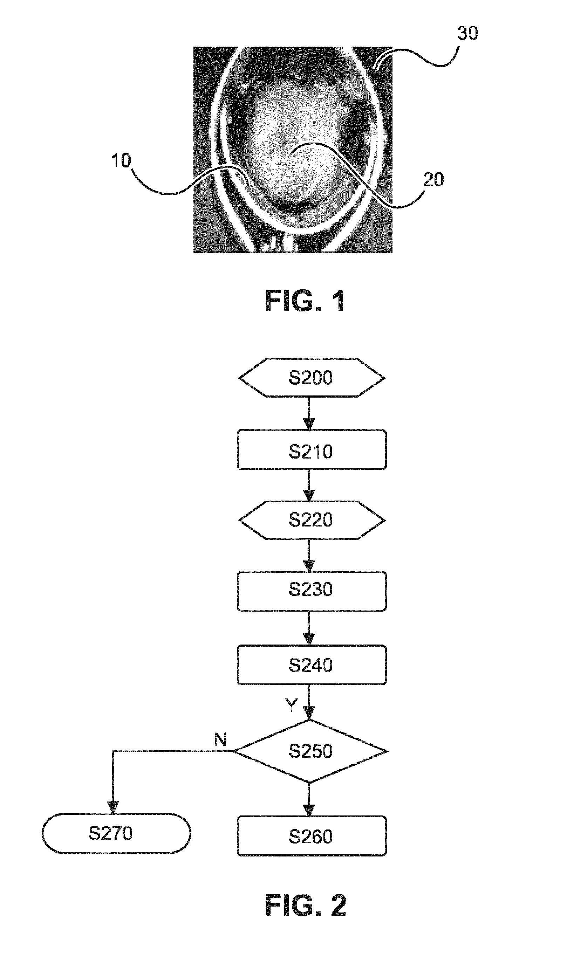

Fig. 1 shows an exemplary original image of a cervix region 12 with a speculum 10 and an unwanted region 30. Many a times, such images are captured at a distance from the cervix region 20 which results in the unwanted regions 30 of a patient's body captured along with targeted cervix region 20.

When such images are captured in less magnification levels, the cervix region 20 appears smaller and lot of unwanted regions 30 are captured due to the small area of vaginal opening (about 1-2cm diameter). The unwanted regions 30 provide completely useless information for the clinician as she is interested in looking at the cervix region 20 and not at regions outside the speculum 10. Moreover, these unwanted regions 30 include private parts of the person being examined.

As mentioned above, if the captured images contain lots of unwanted regions 30, the clinician needs to manually magnify the cervix region 20 to examine it. This conventional approach increases time of case review and hence decreases workflow efficiency.

Additionally, transmission of the image data of the captured image to a remote location typically does not provide any optical zooming or magnification capability. However, mobile cameras have some amount of digital zoom (up to 4 times) to focus on a particular region in the visible scene of the captured image. However, using manual zooming in mobile cameras is not very comfortable unlike digital cameras. Moreover, magnification is very important to prevent capturing unwanted regions in the picture, producing unnecessary storage and transmission costs and ensuring privacy. Due to these high burdens, users typically only capture images with low magnification in the cervical examination procedure. However, this can lead to the problem of inaccurate clinical interpretation.

### SUMMARY OF THE INVENTION

It is an object of the present invention to provide an improved image processing system which provides an image with optimized extraction of a region of interest.

This object is achieved by an apparatus as claimed in claim 1, by a system as claimed in claim 9, by a method as claimed in claim 10, and by a computer program product as claimed in claim 11.

Accordingly, an improved approach for filtering unwanted regions and automatically extracting a region of interest (e.g. the cervix region or another region examined by use of a speculum) based on speculum detection is proposed, wherein the speculum detection can be executed immediately after the image is captured, so that only image data of the targeted region of interest needs to be saved, instead of the full image data. This provides the advantages of increased workflow efficiency (since the clinician will only see the targeted region of interest which is important for disease diagnosis or screening), reduced storage space and transmission time (since unwanted regions are removed and the region of interest is cropped), and improved patient privacy (since unwanted regions are filtered out). Moreover, using the proposed solution, only the region of interest can be sent to remote locations, which will save bandwidth and reduce the cost of transmission.

According to a first option, a bounding box may be derived from the extracted region of interest and the original image may be cropped or masked based on the bounding box. Thereby, the original cervix region can be maintained and the amount of image data of the originally captured image can be reduced and unwanted regions can be removed by the cropping or masking process,

According to a second option which can be combined with the first option, the first color space may be an RGB (red, green blue) space and the second color space may be a HSV (hue, saturation, value) space. Thus, the proposed processing can be advantageously applied to any captured image of a conventional RGB space. The image in the hue space (i.e. the hue image) may be extracted and normalized for the further processing.

According to a third option which can be combined with the first or second option, the threshold used for speculum detection may be adaptively increased up to a point where a sudden increase in the number of thresholded pixels is detected. This measure ensures that a high-contrast image of the speculum is obtained.

According to a fourth option which can be combined with any one of the above first to third options, the region of interest may be extracted by applying a threshold to the transformed image, filling it by a morphological filling operation, and extracting the region of interest based on predetermined component properties. Thereby, it can be ensured that the region of interest can be well distinguished from other image regions.

According to a fifth option which can be combined with any one of the above first to fourth options, an alert may be generated if the size of the region of interest in the original image is detected to be smaller than a predetermined minimum size. Thus, a visual, audio or other kind of alert can be signalled to the user if current magnification is lower and unwanted regions are appearing in the image. A zoom alert can be initiated if the cervix region is too small to analyze, so that the user is prompted to increase the zoom level or reduce the distance to the speculum.

It is noted that the above apparatus may be implemented based on discrete hardware circuitry with discrete hardware components, an integrated chip, or an arrangement of chip modules, or based on a signal processing device or chip controlled by a software routine or program stored in a memory, written on a computer readable medium, or downloaded from a network, such as the Internet.

It shall be understood that the apparatus of claim 1, the system of claim 9, the method of claim 10, and the computer program of claim 11 may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows a medical image of a cervix region with unwanted regions as obtained by conventional image processing;
Fig. 2 shows a schematic flow diagram of an automatic extraction and filtering procedure according to a first embodiment;
Fig. 3 shows a more detailed flow diagram of a cervix region extraction procedure according to a second embodiment;
Fig. 4 shows an exemplary original image of a uterine cervix phantom with unwanted regions;
Fig. 5 shows an exemplary image of the uterine cervix phantom in the hue space;
Figs. 6A and 6B show respective thresholded images in the hue space before and after padding white regions at image borders;
Fig. 7 shows a distance transformation of a thresholded image;
Fig. 8 shows a binary image obtained after thresholding, complementing and filling;
Fig. 9 shows a connected component labeling image;
Fig. 10 shows an extracted region of interest after applying component heuristics; and
Fig. 11 shows an automatically cropped region of the original image.

### DETAILED DESCRIPTION OF EMBODIMENTS

Embodiments of the present invention are now described based on a medical display system which comprises an image processing function or apparatus for processing an image captured by a camera or another image generating device of the display system to present the cervix region to a clinician.

Throughout the cervical examination, one visible part which is unchanged is the speculum. It is therefore suggested to use the speculum as a basis for extraction of the cervix region or another region of interest inspected by the speculum. Thereby, unwanted regions can be reduced by automatically extracting the speculum region and thereafter extracting the cervix region which lies inside speculum region.

In an initial speculum detection stage, the captured image is converted from the RGB (Red, Green and Blue color dimensions) space to the HSV (Hue, Saturation and Value color dimensions) space. The speculum can then be detected by using iterative thresholding of the hue space followed by morphological image processing. Mathematical morphology (MM) is the foundation of morphological image processing, which consists of a set of operators that transform images according to the following characteristics. MM is a theory and technique for the analysis and processing of geometrical structures, based on set theory, lattice theory, topology, and random functions. MM is most commonly applied to digital images, but it can be employed as well on graphs, surfaces meshes, solids, and many other spatial structures. Topological and geometrical continuous-space concepts such as size, shape, convexity, connectivity, and geodesic distance, were introduced by MM on both continuous and discrete spaces.

In a following cervix region extraction stage, specific measures are applied so that the cervix region can be extracted using binary objects or components detected in the unzoomed captured image. To this end, measures like solidity (e.g. number of white pixels / convex hull region area of the component), ratio of major and minor axis etc. can be used. After removing all unwanted regions and extracting the correct cervix region, a bounding box of the cervix region can be obtained. This bounding box of the cervix region can be used to crop the input image so that no unwanted regions remain. The cropped image can be presented to a user of clinical interest or to a clinician, so that manual finding of the cervix region is no longer necessary and distractions due to unwanted regions available in the image can be reduced.

It is noted that the above approach can also be used to extract cervix regions even when the cervix is partially visible only.

In general, cervical examination photographs can be from size QVGA (320x240) according to the Quarter Video Graphics Array (QVGA) standard to the size of 5 mega pixel which can take storage space of about 20KB to about 5MB. Using the proposed image processing based on speculum detection for removing unwanted regions, we reduce the file size from about 10% to about 90%. This helps in reducing time for transmission and storage space needed and in saving cost and time.

If the cervix size appears too small, an alert can be generated for a user to zoom in to the cervix region to get better quality pictures.

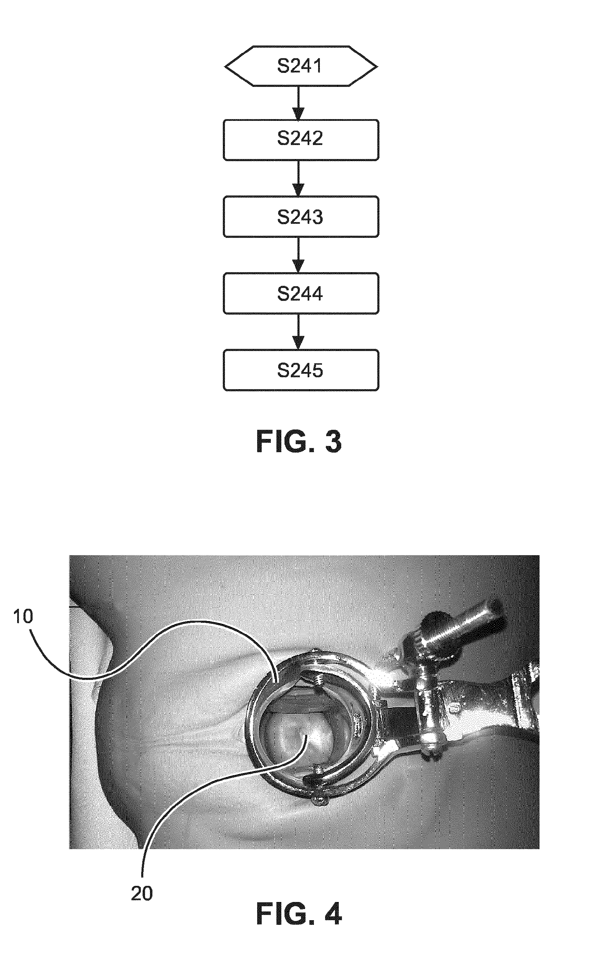

Fig. 2 shows an overall flowchart of an image processing procedure according to a first embodiment. The steps S200 to S270 of Fig. 2 are described based on Figs. 4 to 11 starting with a phantom cervix image shown in Fig. 4 which corresponds to the captured image input in step S200 and which shows the cervix region 20 and the speculum 10. Then, in step S210, the standard RGB space of the captured image is converted to the HSV space by colormap conversion. Any color space with a hue component, channel or space can be used in the present invention as a conversion target.

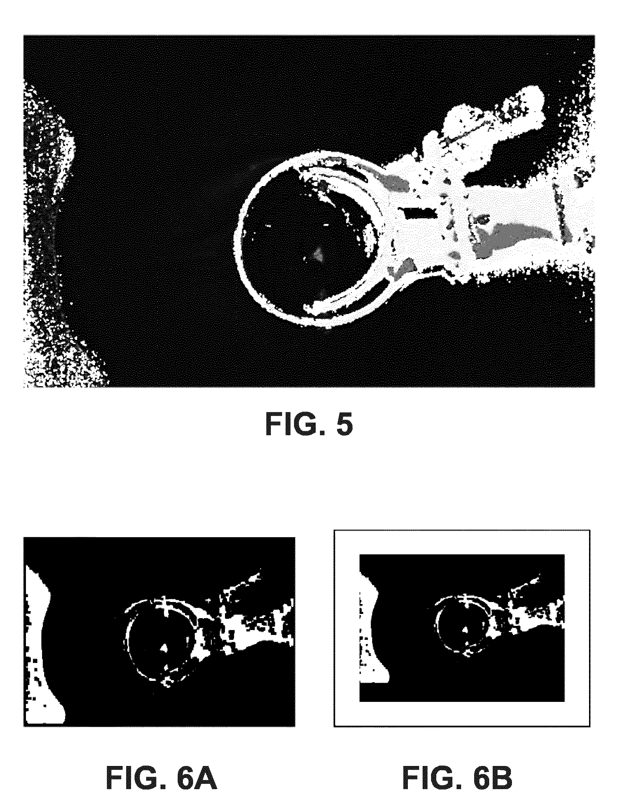

Then, in step S220, the hue image is extracted and the hue channel is normalized. The hue component can be used to discriminate between the speculum 10, skin colour and the cervix region 20. As can be gathered from Fig. 5, the speculum 10 is visible in high intensity with some noise. In step S230, a threshold is applied to the hue image to extract the speculum 10. This can be achieved by using adaptive thresholds which may comprise higher and lower thresholds. The adaptive threshold is automatically and adaptively increased until a point where a sudden increase in the number of thresholded pixels is detected. Also, if the speculum 10 is large and does not completely appear on the captured image, the thresholded image may be padded with a white region (e.g. with a width of 100 pixels).

Figs. 6A and 6B show respective thresholded images in the hue space before and after padding with white regions at image borders.

In the next step S240, the cervix region 20 is extracted. After removing the unwanted regions and extracting the right cervix region component of the image, a bounding box of the cervix region can be determined.

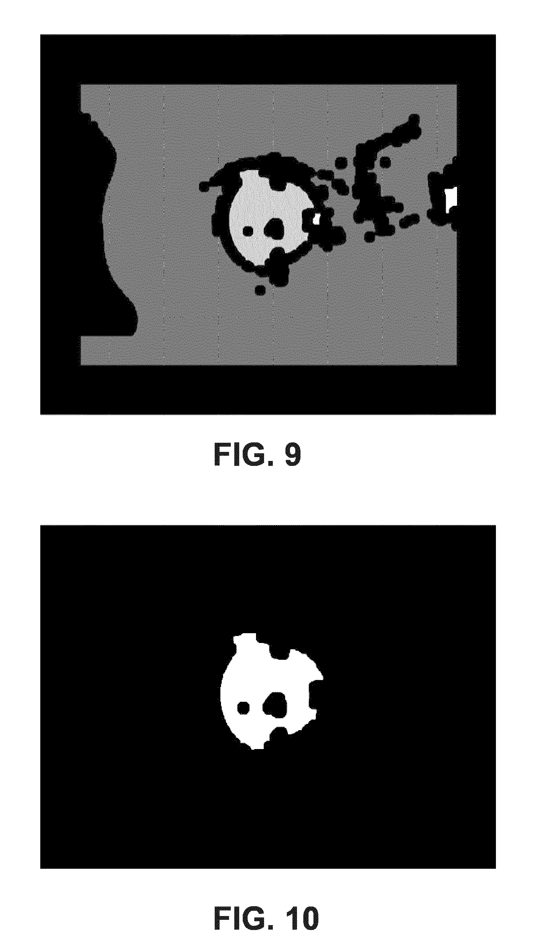

In step S250 it is checked whether the extracted cervix region component meets the heuristics for a proper extraction of the cervix region 20. These heuristics may be based on the aspect ratio of the cervix region component and the solidity (i.e. area of the cervix region divided by area of the convex hull of the extracted cervix region component). Fig. 10 shows an example of the extracted cervix region component by applying component heuristics to the image of the extracted cervix region component.

If it is determined in step S250 that no suitable component has been found, which satisfies the heuristics, the procedure branches to step S270 and the originally captured image is saved. Otherwise, if the result of extraction is determined to be satisfying, the procedure continues with step S260 and the original image is cropped based on the bounding box values of the extracted cervix region component.

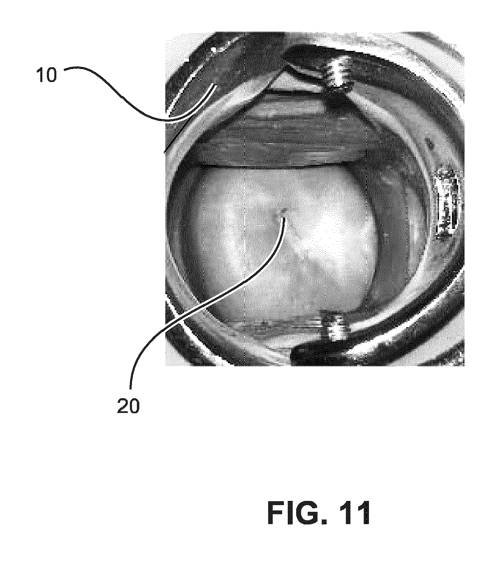

Fig. 11 shows an example of an automatically cropped region which can be saved for further analysis. Here, all unwanted regions have been removed using the proposed image processing according to various embodiments.

Fig. 3 shows a flow diagram of a more detailed procedure for extracting the cervix region (step S240 of Fig. 2), according to a second embodiment.

The procedure starts at step S241 with an input of the thresholded hue image of Fig. 6B. In step S242, the thresholded hue image shown in Fig. 6A or 6B is processed by computing a distance transformation. A distance transform, also known as distance map or distance field, is a derived representation of a digital image. The map labels each pixel of the image with the distance to the nearest obstacle pixel. A most common type of obstacle pixel is a boundary pixel in a binary image. Usually the transform or map is qualified with a chosen metric. Examples of common metrics are Euclidean distance, Taxicab geometry (also known as City block distance or Manhattan distance) and Chessboard distance.

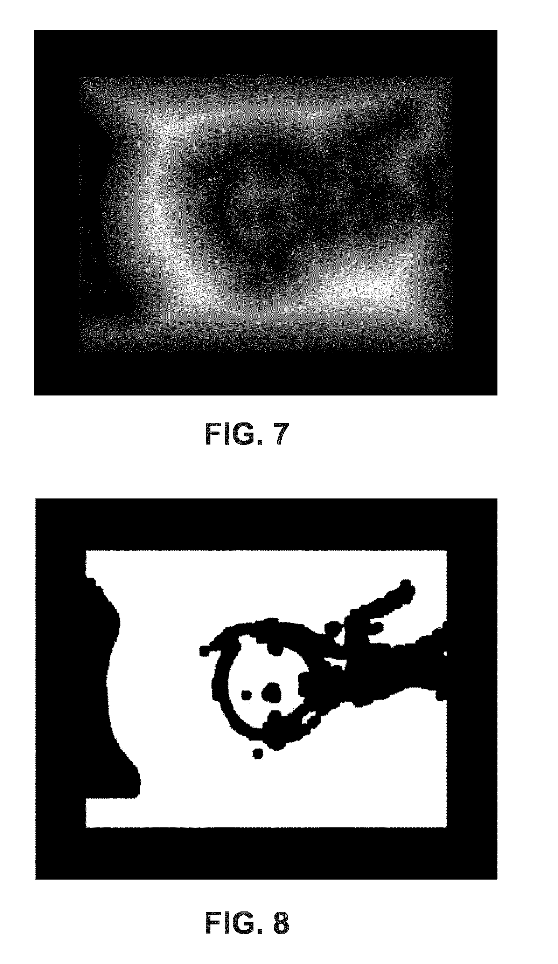

Fig. 7 shows an example of a distance transform of the thresholded image of Fig.6B. The distance transform helps in connecting speculum regions which may not appear completely in the thresholded image.

Then, in step S243, a threshold is applied to the distance transformed image, the obtained image is complemented (or inverted) and filled by a morphological hole filling operation.

Fig. 8 shows the resultant image after thresholding, complementing and filling. As can be gathered from Fig. 8, the speculum region which acted as divider between outside unwanted regions and cervix region is now completely removed.

Finally, in step S245, the cervix region component can be extracted by using connected component labelling (sometimes also called connected-component analysis, blob extraction, region labeling, blob discovery, or region extraction). This measure is an algorithmic application of graph theory, where subsets of connected components are uniquely labeled based on a given heuristic. Connected-component labeling is not to be confused with segmentation. It is used in computer vision to detect connected regions in binary digital images, although color images and data with higher dimensionality can also be processed. Blob extraction is generally performed on the resulting binary image from a thresholding step. Blobs may be counted, filtered, and tracked. In the second embodiment, measures like solidity (number of white pixels / convex hull region area of the component), ratio of major and minor axis etc. are performed.

Fig. 9 shows an example of the connected component labelling image for the present case. As can be gathered from Fig. 9, the cervix region is labelled differently from the unwanted regions and can therefore be easily discriminated and used for proper extraction of the cervix region.

To summarize, a method and an apparatus for processing an image have been described, wherein unwanted regions are filtered and a region of interest (e.g. the cervix region of a patient) is extracted based on speculum detection executed immediately after the image is captured, and to save the cervix region instead of a full image. Unwanted regions are removed and the image is cropped to be restricted to the region of interest, so that storage space can be saved. Thereby, workflow efficiency can be increased and storage space and transmission time can be reduced.

While the invention has been illustrated and described in detail in the drawings and foregoing description, such illustration and description are to be considered illustrative or exemplary and not restrictive. The invention is not limited to the disclosed embodiments with the extracted cervix region. The proposed processing can be applied to other regions which are examined or analyzed with the help of a speculum. The application of the proposed invention is manifold in cervical examination like colposcopy, cervicography etc. It helps in better privacy of the patients, optimize image data outlook.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage.

The foregoing description details certain embodiments of the invention. It will be appreciated, however, that no matter how detailed the foregoing appears in text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

A single unit or device may fulfill the functions of several items recited in the claims. The mere fact that certain measures are recited in mutually different dependent claims does not indicate that a combination of these measures cannot be used to advantage.

The described operations like those indicated in Figs. 2 and 3 can be implemented as program code means of a computer program and/or as dedicated hardware. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus for processing image data of an original image comprising a region of interest (20), said apparatus comprising:
- a color space converter (S210) for converting said image data from a first color space into a second color space, said second color space including a hue space;
- a detector (S230) for detecting a speculum device (10) in said converted image by applying at least one threshold to said image in said hue space; and
- an extractor (S240) for extracting said region of interest (20) by applying a distance transformation of the threshold image in said hue space to connect missing speculum regions and by applying a connected component labeling to detect connected regions.

2. The apparatus of claim 1, wherein said apparatus is adapted to derive a bounding box from said extracted region of interest (20) and to crop said original image based on said bounding box.

3. The apparatus of claim 1, wherein said first color space is a red green blue, RGB, space and wherein said second color space is a hue saturation value, HSV, space.

4. The apparatus of claim 1, wherein said detector (S230) is adapted to adaptively increase said threshold up to a point where a sudden increase in the number of thresholded pixels is detected.

5. The apparatus of claim 1, wherein said extractor (S240) is adapted to extract said region of interest (20) by applying a threshold to the transformed image, filling it by a morphological filling operation, and extracting said region of interest (20) based on component properties.

6. The apparatus of claim 1, wherein said apparatus is adapted to generate an alert if the size of said region of interest (20) in said original image is detected to be smaller than a predetermined minimum size.

7. The apparatus of claim 1, wherein said apparatus is adapted to extract and normalize said image in said hue space.

8. The apparatus of claim 1, wherein said region of interest comprises a cervix region (20).

9. A medical display system comprising an apparatus according to any one of claims 1 to 7.

10. A method of processing image data of an original image comprising a region of interest (20), said method comprising the steps of:
- converting (S210) said image data from a first color space into a second color space, said second color space including a hue space;
- detecting (S230) a speculum device (10) in said converted image by applying at least one threshold to said image in said hue space; and
- extracting said region of interest (20) by applying a distance transformation of the threshold image in said hue space to connect missing speculum regions and by applying a connected component labeling to detect connected regions.

11. A computer program product comprising code means for producing the steps of claim 1 when run on a computer device.
